(19) Europäisches Patentamt
European Patent Office
Office européen des brevets

(11) EP 1 716 204 B1

(12) **EUROPEAN PATENT SPECIFICATION**

(45) Date of publication and mention of the grant of the patent:
**27.01.2010 Bulletin 2010/04**

(21) Application number: **05701338.5**

(22) Date of filing: **02.02.2005**

(51) Int Cl.:
***C08L 67/06*** *(2006.01)* ***C08L 31/04*** *(2006.01)*
***C08K 5/32*** *(2006.01)* ***C08K 5/18*** *(2006.01)*

(86) International application number:
**PCT/EP2005/001109**

(87) International publication number:
**WO 2005/078020 (25.08.2005 Gazette 2005/34)**

(54) **UNSATURATED POLYESTER RESINS OR VINYL ESTER RESIN COMPOSITIONS**

UNGESÄTTIGTES POLYESTERHARZ ODER VINYLESTERHARZ ENTHALTENDE ZUSAMMENSETZUNGEN

COMPOSITIONS INSATUREES DE RESINE POLYESTER ET DE RESINE VINYLE

(84) Designated Contracting States:
**AT BE BG CH CY CZ DE DK EE ES FI FR GB GR HU IE IS IT LI LT LU MC NL PL PT RO SE SI SK TR**

(30) Priority: **17.02.2004 EP 04075488**

(43) Date of publication of application:
**02.11.2006 Bulletin 2006/44**

(73) Proprietor: **DSM IP Assets B.V.**
**6411 TE Heerlen (NL)**

(72) Inventors:
- **JANSEN, Johan, Franz, Gradus, Antonius**
**6165 AP Geleen (NL)**
- **KRAEGER, Ivo, Ronald**
**NL-3742 PJ Baarn (NL)**

(74) Representative: **Verhaegen, Ilse Maria M.**
**DSM Intellectual Property**
**P.O. Box 9**
**6160 MA Geleen (NL)**

(56) References cited:
**WO-A-89/08669**
**US-A- 4 743 657**
**US-A- 6 028 131**
**US-A1- 2003 189 192**
**US-A1- 2003 197 151**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 716 204 B1

## Description

The present invention relates to a method of providing unsaturated polyester resin or vinyl ester resin compositions containing a phenolic inhibitor and a reactive diluent, the resin composition being curable by means of radical curing, in which method first a primary unsaturated polyester resin or vinyl ester resin composition containing a phenolic inhibitor is produced with the phenolic inhibitor being selected from the group of phenolic compounds of which the O-H bond dissociation enthalpy is in the range of from about 325 to 380 kJ/mol. The unsaturated polyester resin or vinyl ester resin compositions according to the invention show a reduced gel-time drift tendency as compared with state of the art resin compositions. The present invention further also relates to objects and structural parts prepared from such unsaturated polyester or vinyl ester resin compositions. Objects and structural parts, as meant herein, are considered to have a thickness of at least 0,5 mm and appropriate mechanical properties. The term "objects and structural parts", as meant herein also includes cured resin compositions that are used in the field of chemical anchoring, construction, roofing, flooring, windmill blades, containers, tanks, pipes, automotive parts, boats, etc.

As meant herein the term gel-time drift (for a specifically selected period of time, for instance, 30 or 60 days) reflects the phenomenon, that - when curing is performed at another point of time than at the reference standard moment for curing 24 hours after preparation of the resin - the gel time observed is different from that at the point of reference. For unsaturated polyester resins and vinyl ester resin's, as can generally be cured under the influence of peroxides, gel time represents the time lapsed in the curing phase of the resin to increase in temperature from 25 °C to 35 °C. Normally this corresponds to the time the fluidity (or viscosity) of the resin is still in a range where the resin can be handled easily. In closed mould operations, for instance, this time period is very important to be known. The lower the gel-time drift is, the better predictable the behavior of the resin (and the resulting properties of the cured material) will be.

W. D. Cook et al. in Polym. Int. Vol.50, 2001, at pages 129-134 describe in an interesting article various aspects of control of gel time and exotherm behavior during cure of unsaturated polyester resins. They also demonstrate how the exotherm behavior during cure of such resins can be followed. Figures 2 and 3 of this article show the gel times in the bottom parts of the exotherms measured. Because these authors focus on the exotherms as a whole, they also introduced some correction of the exotherms for heat loss. As can be seen from the figures, however, such correction for heat loss is not relevant for gel times below 100 minutes.

Gel time drift (hereinafter: "Gtd") can be expressed in a formula as follows:

$$Gtd = (T_{25\text{-}35°C\ at\ x\text{-}days} - T_{25\text{-}35°C\ at\ 1day}) / T_{25\text{-}35°C\ at\ 1day} \times 100\% \qquad \text{(formula 1)}$$

In this formula $T_{25\text{->}35°C}$ (which also might be represented by $T_{gel}$) represents, as mentioned above, the time lapsed in the curing phase of the resin to increase in temperature from 25 °C to 35 °C. The additional reference to "at x days" shows after how many days of preparing the resin the curing is effected.

All polyester resins, by their nature, undergo some changes over time from their production till their actual curing. One of the characteristics where such changes become visible is the gel-time drift. The state of the art unsaturated polyester or vinyl ester resin systems generally are cured by means of initiation systems. In general, such unsaturated polyester or vinyl ester resin systems are cured under the influence of peroxides and are pre-accelerated by the presence of metal compounds, especially cobalt salts, tertiary amines and mercaptans as accelerators. Cobalt naphthenate and cobalt octanoate are the most widely used accelerators. In addition to accelerators, the polyester resins usually also contain inhibitors for ensuring that the resin systems do not gellify prematurely (i.e. that they have a good storage stability). Furthermore, inhibitors are used to ensure that the resin systems have an appropriate gel time and/or for adjusting the gel-time value of the resin system to an even more suitable value. Phenolic inhibitors are commonly used. Accordingly, unsaturated polyester resins and vinyl ester resins containing a phenolic inhibitor are well known in the state of the art resins.

An excellent review article of M. Malik et al. in J.M.S. - Rev. Macromol. Chem. Phys., C40(2&3), p.139-165 (2000) gives a good overview of the current status of these resin systems. Curing is addressed in chapter 9. Inhibition predominantly takes place in the induction phase of the curing process, where the inhibitor consumes free radicals, and very little polymerization takes place. Inhibition by phenolic inhibitors, for instance, by hydroquinones, during resin preparation is addressed in chapter 3. For discussion of control of gel time reference can be made to the article of Cook *et al.* as has been mentioned above. Said article, however, does not present any hint as to the problems of gel-time drift that are being solved according to the present invention.

The phenomenon of gel-time drift, indeed, so far got quite little attention in the literature. Most attention so far has been given in literature to aspects of acceleration of gel time in general, and to improving of pot-life or shelf life of resins. The latter aspects, however, are not necessarily correlated to aspects of gel-time drift, and so, the literature until

now gives very little suggestions as to possible solutions for improvement of (i.e, lowering of) gel-time drift. For instance, reference can be made to a paper presented by M. Belford et al., at the Fire Retardant Chemicals Association Spring Conference, March 10-13, 2002 where the gel-time reducing effect of a new antimony pentoxide dispersion (NYACOL APE 3040) has been addressed in fire retardant polyester resins promoted with cobalt.

Accordingly, for the unsaturated polyester resins and vinyl ester resins that are part of the current state of the art there is still need for finding resin systems showing reduced gel-time drift, or in other words, resin systems having only slight gel-time drift. Preferably the mechanical properties of the resin composition after curing are unaffected (or improved) as a result of the changes in the resin composition in order to achieve the reduced gel-time drift.

The present inventors now surprisingly found that reduced gel-time drift of unsaturated polyester resin or vinyl ester resin compositions containing a phenolic inhibitor and a reactive diluent, the resin composition being curable by means of radical curing, in which method first a primary unsaturated polyester resin or vinyl ester resin composition containing a phenolic inhibitor is produced with the phenolic inhibitor being selected from the group of phenolic compounds of which the O-H bond dissociation enthalpy is in the range of from about 325 to 380 kJ/mol could be obtained by adding to said primary unsaturated polyester resin or vinyl ester resin composition an aromatic amine compound for which the calculated oxidation potential (hereinafter also referred to as $CE_{ox}$) is equal to or lower than 659 kJ/mol. For conversion to 1 kcal/mol, the conversion factor of 1kJ/mol equals 0,2390 kcal/mol can be used.

The $CE_{ox}$ is the energy difference between the energy of the lowest energy conformation of the neutral compound and the corresponding radical cation. In a formula this can be represented by:

$$CE_{ox} = E_{rad\,cat} - E_{neut}$$

The values for $CE_{ox}$ for organic amines can easily be calculated according to the method and models as are described in more detail in the experimental part hereof.

Aromatic amine compounds having a $CE_{ox}$ equal to or lower than 659 kJ/mol that can suitably be used in the context of the present invention are, for example, selected from the group of aromatic tertiary amines. Very suitable examples of such tertiary aromatic amines are, for instance, 4-methoxy-dimethylaniline, N,N-diethanolaniline, N,N-diethanoltoluidine, N,N-diethanolaniline mono-methylether, N,N-diethanolaniline dimethylether, N,N-diisopropanolaniline, N,N-diisopropanoltoluidine, N,N-diisopropanoltoluidine monomethyl ether, N,N-diisopropanoltoluidine dimethyl ether, N,N-diglycidyl-4-glycidyloxyaniline, N,N-diglycidylaniline, and 4,4-methylene-bis(N,N-bis-glycidylaniline). Also ethoxylated or propoxylated anilines, respectively ethoxylated or propoxylated toluidines may suitably be used and are considered to be encompassed in the group of suitable tertiary aromatic amines.

Preferably said aromatic amine compound having a $CE_{ox}$ equal to or lower than 659 kJ/mol, is chosen from the group of aromatic tertiary amine compounds, and most preferably it is an aromatic tertiary amine having a β-hydroxy or a β-alkoxy (generally $C_{1-12}$) substituent. Suitable examples of aromatic tertiary amines, and of β-hydroxy- or β-alkoxy-substituted aromatic tertiary amines are shown in the above list of tertiary amines.

It may be noted, that stabilisation of organic polymeric materials in general is also known to be achieved by means of sterically hindered amine compounds, for instance, by the ones mentioned in US 2003/0197151 A1 or optionally used according to US 2003/0189192 in combination with (a) a 3-pyrazolidinone, and (b) an organic phosphite or phosphonite, and (c) a sterically hindered phenol. In particular these references address problems of photostability in polymers, but none of these references addresses the problem of gel-time drift tendency in uncured resins.

US-A-6028131, moreover, discloses stabilizers for synthetic and natural rubber vulcanisates, which stabilizer molecules are large molecules containing phenolic and amine groups. And US-A-4743657 and WO 89/08669 relate to polymer bound stabilizers for the stabilization of polymers, but these references do not show any effects as to curing of resins. Accordingly, none of these latter three references addresses the problem of gel-time drift tendency of uncured resins.

As meant herein, the O-H bond dissociation enthalpy (hereinafter also referred to as "BDE") for the phenolic inhibitor reflects the energy needed for breaking the O-H bond in the molecule. The BDE-value can be determined, for instance, by photoacoustic calorimetric methods as described in general by Laarhoven et al. in Acc. Chem. Res, 32 (1999), pages 342-349 and for phenolic hydrogen bonds by de Heer et al. in J. Org. Chem. 64 (1999), at pages 6969-6975. In a further part of this patent application also the bond dissociation enthalpy is addressed for -NO-E bonds in certain N-oxyl compounds. Said bond dissociation enthalpy, assuming E to be a hydrogen atom, can be determined in the same way.

Preferably, the O-H bond dissociation enthalpy of the phenolic inhibitor selected is in the range of from about 330 to 351 kJ/mol.

The phenolic inhibitor having an O-H bond dissociation enthalpy in the range of from 325 to 380 kJ/mol (preferably

of from about 330 to 351 kJ/mol) is preferably present in the primary unsaturated polyester resin or vinyl ester resin composition in an amount of from about 0,01 to 60 mmol per kg of basic resin system.

For understanding of the invention, and for proper assessment of the amounts of phenolic inhibitor and of aromatic amine compound (having a $CE_{ox}$ equal to or lower than 659 kJ/mol), to be present in, respectively to be added to, the primary unsaturated polyester resin or vinyl ester resin composition in order to obtain the resin composition according to the invention, the term "basic resin system" is introduced here. As used herein, the term "basic resin system" is understood to mean the total weight of the resin, but excluding any fillers that may be used when applying the resin system for its intended uses. The basic resin system therefore consists of the unsaturated polyester resin or vinyl ester resin, any additives present therein (except for the peroxide component that is to be added shortly before the curing) for making it suitable for curing, for instance all kinds of compounds soluble in the resin, such as initiators, accelerators, inhibitors (including the phenolic inhibitor as is to be present in the resin compositions of the invention, and including the aromatic amine compound having a $CE_{ox}$ equal to or lower than 659 kJ/mol), low-profile agents, colorants (dyes), thixotropic agents, release agents etc., as well as styrene and/or other solvents as may usually be present therein. The amount of additives soluble in the resin usually may be as from 1 to 25 wt.% of the basic resin system; the amount of styrene and/or other solvent may be as large as, for instance, up to 75 wt.% of the basic resin system. The basic resin system, however, explicitly does not include compounds not soluble therein, such as fillers (e.g. glass or carbon fibers), talc, clay, solid pigments (such as, for instance, titanium dioxide (titanium white)), flame retardants, e.g. aluminium oxide hydrates, etc.

This amount of phenolic inhibitor as used in the context of the present invention, may, however, vary within rather wide ranges, and may be chosen as a first indication of the gel time as is desired to be achieved. Preferably, the amount of phenolic inhibitor is from about 0,2 to 35 mmol per kg of basic resin system, and more preferably it amounts to more than 0,5, most preferably more than 1 mmol per kg of basic resin system. Depending on the type of phenolic inhibitor selected, the skilled man can quite easily assess, in which amount thereof leads to good results according to the invention.

The type of phenolic inhibitor to be selected is most preferably chosen from the group of phenol, hydroquinones and catechols. Especially preferred are 1,2-dihydroxy substituted or 1,4-dihydroxy substituted aromatic compounds. The hydroquinones and catechols as used in the context of the present invention also may be applied in the form of their quinone precursors, which *in situ* will generate hydroquinones and catechols in the reaction system. For such precursors the respective BDE-values can be calculated as being the BDE-values for the hydroquinones and catechols themselves. The phenolic inhibitor selected most preferably is a 1,2-dihydroxy substituted aromatic compound, because in such case not only the gel-time drift is reduced most significantly, but also adjustment of the gel time itself is most appropriately achieved.

Suitably, the aromatic amine compound having a $CE_{ox}$ equal to or lower than 659 kJ/mol is added in an amount of from 0,5 to 300 mmol per kg of basic resin, more preferably of from 2 to 200 mmol per kg of basic resin. In a specific further preferred embodiment of the present invention, the aromatic amine compound is added in an amount of from 5 to 50 mmol per kg of basic resin. The advantages of these very preferred embodiments according to the invention are demonstrated in the experimental part hereof. It will be clear to the skilled man, that the amount of amine to be added also will be depending on the type of curing system used in combination with the resin composition. Generally when curing with hydroperoxides (in combination with cobalt accelerators) lower amounts of amine are required than when curing, for instance, with BPO + amine curing systems.

According to the present invention, the amount of aromatic amine compound having a $CE_{ox}$ equal to or lower than 659 kJ/mol, as is to be added, may be chosen in a wide range. When higher molar amounts are added than are indicated above, this will generally not further influence the reduction of gel-time drift, or even lead to a negative value in gel-time drift; when smaller amounts are added, then the effect on gel-time drift reduction becomes negligible. Usually already the lowest amounts indicated hereinabove are already found to be sufficient (i.e. effective) to achieve the intended reduced gel-time drift. As meant herein the term "effective" indicates that the effect of gel-time drift reduction caused by the amount of aromatic amine compound, i.e. not close to the limits of detectability of such effect.

Even more preferred, the aromatic amine compound having a $CE_{ox}$ equal to or lower than 659 kJ/mol is added in a molar ratio (phenolic inhibitor vs. aromatic amine compound) in the range of from 1 : 1 to 1 : 100, preferably of from 1 : 1 to 1 : 50, more preferably of from 1 : 2 to 1 : 20, as compared to the molar amount of the phenolic inhibitor selected having an O-H bond dissociation enthalpy in the range of from 325 to 380 kJ/mol.

The unsaturated polyester resin or vinyl ester resin may be any such resin as is known to the skilled man. Examples thereof can be found in the aforementioned review article by M. Malik *et al.*, who describe a classification of such resins - on the basis of their structure - in five groups: (1) ortho resins; (2) iso-resins; (3) bisphenol-A-fumarates; (4) chlorendics, and (5) vinyl ester resins. Besides these classes of resins also so-called dicyclopentadiene (DCPD) resins can be distinguished. More detailed examples thereof will be given below in some of the following paragraphs, as well as in the experimental part.

According to the invention a resin composition showing a reduced gel-time drift tendency is obtained by adding

to a primary unsaturated polyester resin or vinyl ester resin composition containing containing a specifically selected phenolic inhibitor (selected from the group of phenolic compounds having an O-H bond dissociation enthalpy in the range of from 325 to 380 kJ/mol), an amount of an aromatic amine compound having a $CE_{ox}$ equal to or lower than 659 kJ/mol.

Suitable examples of such phenolic inhibitors having an O-H bond dissociation enthalpy in the range of from 325 to 380 kJ/molcan be selected from the following group of compounds, for which the BDE-values, in kJ/mol, are indicated between brackets: bisphenol-A (BDE=358,6), 2-methoxyphenol (BDE= 365,7), 4-methoxyphenol (BDE= 348,1), 2,6-di-tertiary-butylphenol (BDE= 346,4), 2,4,6-trimethylphenol (BDE= 344,8), 2,6-di-tertiary-butyl-p-cresol (BDE= 339,2), 2,4,6-trisdimethylaminomethyl phenol (BDE= 344,8), 4,4'-thio-bis(3-methyl-6-tertiary-butylphenol) (BDE= 349,8), hydroquinone (BDE= 349,0), 2-methylhydroquinone (BDE= 346,9), 2-tertiary-butylhydroquinone (BDE= 341,8), 2,5-di-tertiary-butylhydroquinone (BDE= 339,3), 2,6-di-tertiary-butylhydroquinone (BDE= 328,9), 2,6-dimethylhydroquinone (BDE= 334,3), 2,3,5-trimethylhydroquinone (BDE= 332,2), catechol (BDE= 347,3), 4-tertiary-butylcatechol (BDE= 339,3), 4,6-di-tertiary-butylcatechol (DBE=332,2).

Suitable examples of aromatic amine compound having a $CE_{ox}$ equal to or lower than 659 kJ/mol that can be used in the context of the present invention, have been listed hereinabove.

The present invention is, thus, completely unobvious over the prior art: good results in gel-time drift reduction are achieved, as will be demonstrated in the experimental part. Moreover, the resin systems according to the present invention show good curing behavior. The unobviousness of the present invention can be demonstrated, as will be done in the experimental part, for a number of reasons. Only the unobvious addition, preferably in the molar ratio as described herein, of an aromatic amine compound having a $CE_{ox}$ equal to or lower than 659 kJ/mol, as described herein, leads to the results according to the present invention.

Examples of suitable unsaturated polyester or vinyl ester resins to be used as basic resin systems in the resins of the present invention are, subdivided in the categories as classified by Malik et al., cited above.

(1) Ortho-resins: these are based on phthalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A. Commonly the ones derived from 1,2-propylene glycol are used in combination with a reactive diluent such as styrene.

(2) Iso-resins: these are prepared from isophthalic acid, maleic anhydride or fumaric acid, and glycols. These resins may contain higher proportions of reactive diluent than the ortho resins.

(3) Bisphenol-A-fumarates: these are based on ethoxylated bisphenol-A and fumaric acid.

(4) Chlorendics: are resins prepared from chlorine/bromine containing anhydrides or phenols in the preparation of the UP resins.

(5) Vinyl ester resins: these are resins, which are mostly used because of their hydrolytic resistance and excellent mechanical properties, as well as for their low styrene emission, are having unsaturated sites only in the terminal position, introduced by reaction of epoxy resins (e.g. diglycidyl ether of bisphenol-A, epoxies of the phenol-novolac type, or epoxies based on tetrabromobisphenol-A) with (meth)acrylic acid. Instead of (meth)acrylic acid also (meth) acrylamide may be used.

All of these resins, as can suitably be used in the context of the present invention, may be modified according to methods known to the skilled man, e.g. in order to achieve a lower acid number, hydroxyl number or anhydride number, or in order to become more flexible due to insertion of flexible units in the backbone, etc. The class of DCPD-resins is obtained either by modification of any of the above resin types by Diels-Alder reaction with cyclopentadiene, or they are obtained alternatively by first reacting maleic acid with dicyclopentadiene, followed by the resin manufacture as shown above.

Of course, also other reactive groups curable by reaction with peroxides may be present in the resins, for instance, reactive groups derived from itaconic acid, citraconic acid and allylic groups, etc. Accordingly, the - basic - unsaturated polyester resins used in the present invention may contain solvents. The solvents may be inert to the - basic - resin system or may be reactive therewith during the curing step. Reactive solvents are particularly preferred. Examples of suitable reactive solvents are styrene, $\alpha$-methylstyrene, (meth) acrylates, N-vinylpyrrolidone and N-vinylcaprolactam. Preferably the - basic - unsaturated polyester resins contain at least 5 wt.% of a reactive solvent.

It will be clear that in the context of the present invention, the phenolic inhibitor selected for use in the resin system may be a single phenolic compound, or a mixture of phenolic compounds. Similarly, the aromatic amine compound having a $CE_{ox}$ equal to or lower than 659 kJ/mol, as is to be added, may be one single compound, or a mixture of such compounds.

The unsaturated polyester resins and vinyl ester resins that are used in the context of the present invention may be any type of such resins, but preferably are chosen from the group of DCPD-resins, iso-phthalic resins, ortho-phthalic resins and vinyl ester resins. More detailed examples of resins belonging to such groups of resins have been

shown in the foregoing part of the specification.

These resins all can be cured by means of radical curing. Preferably such curing is initiated with a peroxide. Of course, in addition to the peroxide accelerators can be applied. All peroxides known to the skilled man for use in curing of unsaturated polyester resins and vinyl ester resins can be used. Such peroxides include organic and inorganic peroxides, whether solid or liquid; also hydrogen peroxide may be applied. Examples of suitable peroxides are, for instance, peroxy carbonates (of the formula -OC(O)O-), peroxyesters (of the formula -C(O)OO-), diacylperoxides (of the formula -C(O)OOC(O)-), dialkylperoxides (of the formula -OO-), etc. They can also be oligomeric or polymeric in nature. An extensive series of examples of suitable peroxides can be found, for instance, in US 2002/0091214-A1, paragraph [0018]. The skilled man can easily obtain information about the peroxides and the precautions to be taken in handling the peroxides in the instructions as given by the peroxide producers.

Preferably, the peroxide is chosen from the group of organic peroxides. Examples of suitable organic peroxides are: tertiary alkyl hydroperoxides (such as, for instance, t-butyl hydroperoxide), and other hydroperoxides (such as, for instance, cumene hydroperoxide), peroxyesters or peracids (such as, for instance, t-butyl peresters, benzoyl peroxide, peracetates and perbenzoates, lauryl peroxide, including (di)peroxyesters), perethers (such as, for instance, peroxy diethyl ether), perketones (such as, for instance, methyl ethyl ketone peroxide). Often the organic peroxides used as curing agent are tertiary peresters or tertiary hydroperoxides, i.e. peroxy compounds having tertiary carbon atoms directly united to a -O-O-acyl or - OOH group. Clearly also mixtures of these peroxides with other peroxides may be used in the context of the present invention. The peroxides may also be mixed peroxides, i.e. peroxides containing any two of different peroxygen-bearing moieties in one molecule). When a solid peroxide is used for the curing, the peroxide is preferably benzoyl peroxide (BPO).

Most preferably, however, the peroxide is a liquid peroxide. Handling of liquid peroxides when curing the resins for their final use is generally easier: they have better mixing properties and dissolve more quickly in the resin to be cured.

In particular it is preferred that the peroxide is selected from the group of perethers and perketones. The peroxide most preferred in terms of handling properties and economics is methyl ethyl ketone peroxide (MEK peroxide).

In a particularly preferred embodiment of the present invention, not only an aromatic amine compound having a $CE_{ox}$ equal to or lower than 659 kJ/mol, as discussed hereinbefore, is added to the resin mixture, but also in addition an amount of an N-oxyl compound is added. The term "N-oxyl compound", as meant herein, either reflects an N-oxyl radical as such, or any compound containing an NO-bond.

In particular, the N-oxyl compound is either an N-oxyl radical or a compound containing an -NO-E bond, wherein E represents a group selected from hydrogen, $C_{1-18}$ alkylene, $C_{5-18}$ cycloalkylene, $C_{1-4}$ alkylene substituted by phenyl which is itself optionally substituted by one or two $C_{1-4}$ alkyl groups, or wherein E represents an ester, ether, carbonate, thioester, thioether or a cyclic or heterocyclic aliphatic or aromatic group.

Suitable examples of N-oxyl compounds that particularly well can be used in the context of the present invention, can be represented by one of the following general structural formulae (I), (II) or (III) :

**Formula (I)**

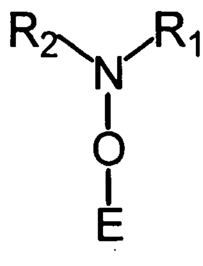

Formula (II) :

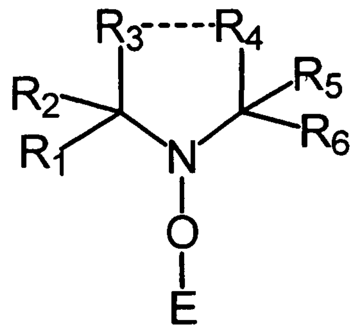

Formula (III) :

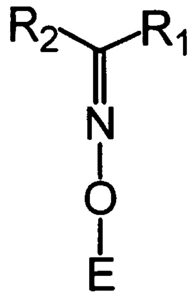

In each of these formulae E represents either a radical (·), or a group as already has been listed above. Each of the groups $R_1$, $R_2$, $R_3$, $R_4$, $R_5$ and $R_6$ in formulae (I) to (III) may represent, independently, hydrogen or a $C_1$-$_8$ linear or branched alkyl group, optionally substituted by one or more inert groups like alcohols, ethers, esters, amines, amides, urethanes, urea, optionally substituted aromatic or heteroaromatic groups, isocyanates, isothiocyanates and the like, and wherein (in formula (II)) the groups $R_3$ and $R_4$ optionally be part of an N-heterocyclic 5- or 6-membered ring structure with the nitrogen shown in the formula.

Examples of N-oxyl compounds that suitably can be used in the present invention include, but are not limited to compounds of formula (I) or (II), for example, hydroxylamine, N-methylhydroxylamine, O-methylhydroxylamine, N,N-dimethylhydroxylamine or N,N-dibutylhydroxylamine; or heterocyclic compounds of formula (II), for example, a series of compounds derived from piperidinyl or pyrrolidinyl groups. Hereinafter (and shown as the N-oxyl radicals themselves) some examples (of such formula (II) radicals) are: 1-oxyl-2,2,6,6-tetramethylpiperidine, 1-oxyl-2,2,6,6-tetramethylpiperidine-4-ol (a compound also referred to as TEMPOL), 4-methoxy-2,2,6,6-tetramethylpiperidine-1-oxyl, bis(1-oxyl-2,2,6,6-tetramethylpiperidine-4-yl) succinate, bis(1-oxyl-2,2,6,6-tetramethylpiperidine-4-yl) adipate, bis(1-oxyl-2,2,6,6-tetramethylpiperidine-4-yl) phthalate, bis(1-oxyl-2,2,6,6-tetramethylpiperidine-4-yl) isophthalate, bis(1-oxyl-2,2,6,6-tetramethylpiperidine-4-yl) terephthalate, N,N'-bis(1-oxyl-2,2,6,6-tetramethylpiperidine-4-yl) adipamide, N-(1-oxyl-2,2,6,6-tetramethylpiperidine-4-yl) caprolactam, 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxy-2,2,5,5-tetramethyl-3-carboxylpyrrolidine (also called 3-carboxy-PROXYL), 1-oxy-2,2,5,5-tetramethyl-3-hydroxypyrrolidine, 1-oxy-2,2,5,5-tetramethyl-3-thioisocyanatopyrrolidine, 1-oxy-2,2,5,5-tetramethyl-3-(carboxy-N-hydroxysuccinimide ester)-pyrrolidine, N-tertiary-butyl-N-α,α-dimethyl benzyloxylamine, N-tertiary-butyl-N-α-methyl-α-benzyloxylamine, etc. or mixtures of such compounds. Examples of N-oxyl compounds belonging to the group of compounds of formula (III) are oximes, for instance, acetaldoxime, acetone oxime, methyl ethyl ketone oxime, salicyl oxime benzoxime, glyoxime, dimethyl glyoxime, acetone-O-benzyloxycarbonyl oxime, etc. It will be evident, that also mixtures of such N-oxyl compounds may be applied.

As mentioned above, resins with excellently low gel-time drift are obtained if - in addition to adding of an aromatic amine compound - also an N-oxyl compound, as discussed hereinabove, is added to obtain the resin compositions of the invention. Preferably, the N-oxyl compound is selected from the group of compounds of formula (II) wherein the nitrogen of the N-O bond forms part of a 5- or 6-membered cyclic group, or from the group of oxime compounds of

formula (III). Most preferably, however, an N-oxyl radical as such is used as the N-oxyl compound to be added.

According to the present invention, the amount of N-oxyl compound, that is to be added in these preferred embodiments of the invention, may be chosen in a wide range. When higher molar amounts are added than are indicated above, this will generally not further influence the reduction of gel-time drift; when smaller amounts are added, then the effect on gel-time drift reduction becomes negligible. Usually already the lowest amounts indicated hereinabove are already found to be sufficient (i.e. effective) to achieve the intended reduced gel-time drift. As meant herein the term "effective" indicates that the effect of gel-time drift reduction caused by the amount of N-oxyl compound, i.e. not close to the limits of detectability of such effect.

Suitably, the N-oxyl compound is added to the resin system in these preferred embodiments of the invention in an amount of at least 0,05 mmol per kg of basic resin system, more suitably it is added in an amount of at most 50 mmol. Preferably, the amount of this N-oxyl compound added is from about 0,2 to 20 mmol per kg of basic resin system, and more preferably it amounts to more than 0,5, most preferably more than 1 mmol per kg of basic resin system. Again, the skilled man quite easily can assess, in dependence of the type of phenolic inhibitor selected and of the type of N-oxyl compound added, which amount of the latter leads to good results according to the invention.

The unsaturated polyester resins and vinyl ester resins according to the present invention can be applied in all applications that are usual for such types of resins. In particular they can suitably be used in closed mould applications, but they can also be applied in open mould applications. For closed mould applications it is especially important that the manufacturer of the closed mould products reliably can use the favorable (i.e. reduced) gel-time drift tendency of the resins according to the invention. End segments where the unsaturated polyester resins and vinyl ester resins according to the present invention can be applied are also marine applications, chemical anchoring, roofing, construction, relining, pipes & tanks, flooring, windmill blades, etc. That is to say, the resins according to the invention can be used in all known uses of unsaturated polyester resins and vinyl ester resins.

The resin compositions according to the present invention are provided from unsaturated polyester resins or vinyl ester resins also containing a reactive diluent. Examples of suitable reactive diluents for the resins are styrene, α-methylstyrene, (meth)acrylates, and the like. Most preferred are resins containing styrene as the reactive diluent. The amount of styrene may be up to, for instance, 200 wt.% of the dry weight of the resin system.

It is especially preferred that the resin compositions according to the invention are cured by means of a peroxide compound. The peroxides used in the curing may either be liquid or solid peroxides. Use of liquid peroxides is most preferred in the curing.

The present invention finally also relates to all such objects or structural parts that are obtained when curing the unsaturated polyester or vinyl ester resin compositions according to the invention. These objects and structural parts have excellent mechanical properties.

The invention is now demonstrated by means of a series of examples and comparative examples. All examples are supportive of the scope of claims. The invention, however, is not restricted to the specific embodiments as shown in the examples.

Experimental part

Calculation of the oxidation potentials ($CE_{ox}$)

All compounds have been constructed by means of the builder facilities of PC Spartan Pro version 1.0.3. For reference, please see PC Spartan Pro 1.0.3 (Jan 11, 2000), Wavefunction Inc., 18401 Von Karman Ave., Suite 370 Irvine, CA 92612.

Using this same package, most of the compounds were subsequently subjected to a conformer distribution run at the semi-empirical AM1 level. Those conformations having the lowest AM1 energy were then used as input for performing DFT optimizations by means of the Turbomole 5.6 package. As has been designed by the Quantum Chemistry Group, University of Karlsruhe, Germany.

The DFT calculations were carried out using the BP86 functional in combination with the SV(P) basis sets. Also, the fast Coulomb approximation (the so-called RI method) and the default convergence criteria of 0,001 Hartree/Bohr for the maximum gradient and $10^{-6}$ Hartree for the maximum energy change were employed.

Next the oxidation potential ($CE_{ox}$) is calculated as the energy difference between the energy of the lowest energy conformation of the neutral compound and the corresponding radical cation. In a formula this can be represented by :

$$CE_{ox} = E_{rad\ cat} - E_{neut}$$

Determination of gel time and peak time, and of gel-time drift

Gel time ($Tgel_{25-35°C}$) and peak time ($Tpeak_{25-peak}$) were determined by exotherm measurements according to the method of DIN 16945 when curing the resin with the peroxides as indicated in the examples and comparative examples. The equipment used therefor was a Soform gel timer, with a Peakpro software package and National Instruments hardware; the waterbath and thermostat used were respectively Haake W26, and Haake DL30.

The gel-time drift (Gtd) was calculated on the basis of the gel times determined at different dates of curing according to formula 1:

$$\text{Drift} = (T_{25\text{-}35°C\ \text{at x-days}} - T_{25\text{-}35°C\ \text{at 1day}}) / T_{25\text{-}35°C\ \text{at 1day}} \times 100\% \qquad \text{(formula 1)}$$

Example 1

To 1kg Synolite 1777-X-4 (an unsaturated polyester resin commercially available from DSM Composite Resins, Schaffhausen, Switzerland), which contained 4,38 mmol/kg t-butylcatechol, there was added 1,76 g (10 mmol/kg, $CE_{ox}$ = 656 kJ/ mol) N-ethyl hydroxyethylaniline, after which the resin was stirred for 5 min and stored overnight. 100 g of the resin mixture was cured with 3% Butanox M50 (methyl ethyl ketone peroxide solution; Akzo Nobel, the Netherlands). This yielded the following cure characteristics : Tgel = 36,0 min; Tpeak = 48,1 min; peak temperature = 150°C.
The curing of 100 g resin with 3% Butanox M50 was repeated after 105 days, yielding the following characteristics : Tgel = 46,1 min; Tpeak = 57,5; peak temperature = 156°C.
Accordingly, a gel-time drift of 28% is observed after 105 days.

Comparative example A

To 1kg Synolite 1777-X-4 there was added 1,5 g N,N-diethylaniline (10 mmol/kg, $CE_{ox}$ = 659 kJ/ mol), after which the resin was stirred for 5 min and stored overnight. 100 g of the resin mixture was cured with 3% Butanox M50 (methyl ethyl ketone peroxide solution). This yielded the following cure characteristics : Tgel = 47,7 min; Tpeak = 61,7 min; peak temperature = 139°C.
The curing of 100 g resin with 3% Butanox M50 was repeated after 105 days, yielding the following characteristics : Tgel = 76 min; Tpeak = 90,8 min; peak temperature = 135°C.
This corresponds to a gel-time drift of 59% after 105 days.

Example 1 and comparative example A clearly demonstrate that addition of an aromatic amine with a calculated oxidation potential lower than 659 kJ/mol dramatically reduces the gel-time drift.

Example 2

To 1 kg Synolite 1777-X-4 there was added 0,92 g (5 mmol/kg, $CE_{ox}$ = 643 kJ/ mol) of N,N-dihydroxyethylaniline, after which the resin was stirred for 5 min and stored overnight. 100 g of the resin mixture was cured with 3% Butanox M50 (methyl ethyl ketone peroxide solution). This yielded the following cure characteristics :
Tgel = 68,9 min; Tpeak = 87,5 min; peak temperature = 145°C.
The curing of 100 g resin with 3% Butanox M50 was repeated after 105 days. yielding the following characteristics : Tgel = 85 min; Tpeak = 103,1 min; peak temperature = 140°C.
This corresponds to a gel-time drift of 23% after 105 days.

Example 3

To 1kg Synolite 1777-X-4 there was added 1,0 g N,N-dihydroxyethyltoluidine (5 mmol/kg, $CE_{ox}$ = 623 kJ/ mol), after which the resin was stirred for 5 min and stored overnight. 100 g of the resin mixture was cured with 3% Butanox M50 (methyl ethyl ketone peroxide solution). This yielded the following cure characteristics : Tgel = 41,2 min; Tpeak = 59,4 min; peak temperature = 127°C.
The curing of 100 g resin with 3% Butanox M50 was repeated after 105 days, yielding the following characteristics : Tgel =38,8 min; Tpeak = 53,7 min; peak temperature = 143°C.
This corresponds to a gel-time drift of -6%.

Example 4

To 1 kg Synolite 1777-X-4 there was added 1,13 g N, N-dihydroxypropyltoluidine (5 mmol/kg, $CE_{ox}$ = 617 kJ/mol), after which the resin was stirred for 5 min and stored overnight. 100 g of the resin mixture was cured with 3% Butanox M50 (methyl ethyl ketone peroxide solution). This yielded the following cure characteristics : Tgel = 49,5 min; Tpeak = 66,3 min; peak temperature = 134°C.
The curing of 100 g resin with 3% Butanox M50 was repeated after 105 days, yielding the following characteristics : Tgel = 59,4 min; Tpeak = 74,7 min; peak temperature = 136°C.
This corresponds to a gel-time drift of 20%.
Examples 2-4 show that aromatic amines with a β-hydroxy substituent are capable of reducing the gel-time drift.

Comparative example B

To 1kg Synolite 1777-X-4 there was added 0,61 g N,N-dimethyl aniline (5 mmol/kg, $CE_{ox}$ = 676 kJ/ mol), after which the resin was stirred for 5 min and stored overnight. 100 g of the resin mixture was cured with 3% Butanox M50 (methyl ethyl ketone peroxide solution). This yielded the following cure characteristics : Tgel = 57,7 min; Tpeak = 76,2 min; peak temperature = 131°C.
The curing of 100 g resin with 3% Butanox M50 was repeated after 105 days, yielding the following characteristics : Tgel = 87,7 min; Tpeak = 108,4 min; peak temperature = 132°C.
This corresponds to a gel-time drift of 52%.

Comparative example C

To 1kg Synolite 1777-X-4 there was added 0,98 g N,N dimethyl-4-ethylamino benzoate (5 mmol/kg, $CE_{ox}$ = 690 kJ/ mol), after which the resin was stirred for 5 min and stored overnight. 100 g of the resin mixture was cured with 3% Butanox M50 (methyl ethyl ketone peroxide solution). This yielded the following cure characteristics : Tgel = 64,8 min; Tpeak = 84,4 min; peak temperature = 136°C.
The curing of 100 g resin with 3% Butanox M50 was repeated after 105 days, yielding the following characteristics : Tgel =108,5 min; Tpeak = 130,9 min; peak temperature = 138°C.
This corresponds to a gel-time drift of 67%.

Comparative example D

To 1kg Synolite 1777-X-4 there was added 0,45 g N,N-dimethylethanolamine (5 mmol/kg, $CE_{ox}$ = 706 kJ/mol), after which the resin was stirred for 5 min and stored overnight. 100 g of the resin mixture was cured with 3% Butanox M50 (methyl ethyl ketone peroxide solution). This yielded the following cure characteristics : Tgel =22,1 min; Tpeak = 30 min; peak temperature= 147°C.
The curing of 100 g resin with 3% Butanox M50 was repeated after 105 days, yielding the following characteristics : Tgel = 36,6 min; Tpeak = 44,1 min; peak temperature = 142°C.
This corresponds to a gel-time drift of 65%.

Comparative example E

To 1kg Synolite 1777-X-4 there was added 1,49 g triethanolamine (10 mmol/kg, $CE_{ox}$ = 660 kJ/ mol), after which the resin was stirred for 5 min and stored overnight. 100 g of the resin mixture was cured with 3% Butanox M50 (methyl ethyl ketone peroxide solution). This yielded the following cure characteristics : Tgel = 25,4 min; Tpeak = 34,0 min; peak temperature = 163°C.
The curing of 100 g resin with 3% Butanox M50 was repeated after 105 days, yielding the following characteristics : Tgel = 38 min; Tpeak = 47,2 min; peak temperature = 162°C.
This corresponds to a gel-time drift of 50%.
Examples 1-4 and comparative examples A-E clearly demonstrate that using aromatic amines with a calculated oxidation potential lower than 659 kJ/ mol leads to resin compositions having a low gel-time drift.

Example 5

To 900 g Palatal P5-01 (an unsaturated polyester resin commercially available from DSM Composite Resins, Schaffhausen, Switzerland) was added 100 g styrene, 2 g cobalt octanoate (10% Co in white spirit) and 0,4 g t-butyl catechol (2,4 mmol/kg). After stiring for 5 minutes 1,82 g dihydroxyethyl-p-toluidine (10 mmol/kg, $CE_{ox}$ = 623 kJ/ mol)

was added and the mixture was stirred for another 5 min. After 1 night storage the resin was cured with 3% Butanox M50 yielding the following cure characteristics : Tgel = 20,4 min; Tpeak = 29,3 min; peak temperature = 161 °C.
The curing was repeated after 56 days, yielding : Tgel = 31,7 min; Tpeak = 39,8 min; peak temperature = 154°C.
This corresponds to a gel-time drift of 59% after 56 days.

Comparative example F

To 900 g Palatal P5-01 there was added 100 g styrene, 2 g cobalt octanoate (10% Co in white spirit) and 0,4 g t-butylcatechol. After 1 night storage the resin was cured with 3% Butanox M50, yielding the following cure characteristics : Tgel = 21,7 min; Tpeak = 32,2 min; peak temperature = 159°C.
The curing was repeated after 56 days, yielding : Tgel = 55 min; Tpeak = 68,4 min; peak temperature = 150°C.
This corresponds to a gel-time drift of 153% after 56 days.

Example 6

To 900 g Palatal P5-01 there was added 100 g styrene, 2 g cobalt octanoate (10% Co in white spirit) and 0,4 g t-butyl catechol (2,4 mmol/kg). After stiring for 5 minutes 1,9 g dihydroxyethyl-p-toluidine (12 mmol/kg, $CE_{ox}$ = 623 kJ/mol) was added, followed by 3,9 g of a 10% TEMPOL solution in styrene (2,1 mmol/kg) and the mixture was stirred for another 5 min. After 1 night storage the resin was cured with 3% Butanox M50 yielding the following cure caractheristics : Tgel = 6,6 min; Tpeak = 16,7 min; peak temperature = 158°C.
The curing was repeated after 133 days, yielding : Tgel =8,8 min; Tpeak = 19,9 min; peak temperature = 156°C.
This corresponds to a gel-time drift of 33% after 133 days.

Comparative example G

To 900 g Palatal P5-01 there was added 100 g styrene, 2 g cobalt octanoate (10% Co in white spirit) and 0,4 g t-butylcatechol. After 1 night storage the resin was cured with 3% Butanox M50 yielding the following cure characteristics : Tgel = 22,5 min; Tpeak = 33,3 min; peak temperature = 158°C.
The curing was repeated after 133 days, yielding: Tgel = 77,7 min; Tpeak = 92,4 min; peak temperature = 147°C.
This corresponds to a gel-time drift of 245% after 133 days.

Example 7

To 900 g Palatal P5-01 there was added 100 g styrene, 2 g cobalt octanoate (10% Co in white spirit) and 0,2 g t-butylcatechol (1,2 mmol/kg). After stiring for 5 minutes 2,1 g N,N-dihydroxy ethyl-p-toluidine (12 mmol/kg, $CE_{ox}$ = 623 kJ/ mol) was added followed by 3,56 g of a 10% TEMPOL solution in styrene (2,1 mmol/kg) and the mixture was stirred for another 5 min. After 1 night storage the resin was cured with 3% Butanox M50 yielding the following cure characteristics : Tgel = 12,5 min; Tpeak = 20,2 min; peak temperature = 162°C.
The curing was repeated after 106 days, yielding : Tgel = 13,9 min; Tpeak = 22 min; peak temperature = 154°C.
This corresponds to a gel-time drift of 11 % after 106 days.

Comparative example H

To 900 g Palatal P5-01 there was added 100 g styrene, 2 g cobalt octanoate (10% Co in white spirit) and 0,2 g t-butylcatechol. After 1 night storage the resin was cured with 3% Butanox M50, yielding the following cure characteristics : Tgel = 13,4 min; Tpeak = 22,8 min; peak temperature = 161°C.
The curing was repeated after 106 days, yielding : Tgel = 38,9 min; Tpeak = 50,2 min; peak temperature = 157°C.
This corresponds to a gel-time drift of 190% after 106 days.

Example 8

To 900 g Palatal P6-01 there was added 100 g styrene, 2 g cobalt octanoate (10% Co in white spirit) and 0,2 g t-butylcatechol (1,2 mmol/kg). After stiring for 5 minutes 2,2 g N,N-dihydroxyethyl-p-toluidine (12 mmol/kg, $CE_{ox}$ = 623 kJ/mol) was added followed by 3,5 g of a 10% TEMPOL solution in styrene (2 mmol/kg) and the mixture was stirred for another 5 min. After 1 night storage the resin was cured with 3% Butanox M50, yielding the following cure characteristics : Tgel = 14,6 min; Tpeak = 20,5 min; peak temperature = 191°C.
The curing was repeated after 171 days, yielding : Tgel = 16,3 min; Tpeak = 22,2 min; peak temperature = 193°C.
This corresponds to a gel-time drift of 12% after 171 days.

Comparative example I

To 900 g Palatal P6-01 there was added 100 g styrene, 2 g cobalt octanoate (10% Co in white spirit) and 0,2 g t-butylcatechol. After 1 night storage the resin was cured with 3% Butanox M50, yielding the following cure characteristics : Tgel = 17,6 min; Tpeak = 24,6 min; peak temperature = 195°C.
The curing was repeated after 171 days, yielding : Tgel = 85,1 min; Tpeak = 97,2 min; peak temperature = 179°C.
This corresponds to a gel-time drift of 384% after 171 days.
The above examples demonstrate that besides the drift reducing activity of an aromatic amine, especially ones containing a β-hydroxy or -alkoxy group, a further substantial gel-time drift reduction is obtained by a synergistic effect with. N-oxyl compounds like TEMPOL. This synergism is further elucidated by the following example.

Example 9a (amine and TEMPOL)

A resin was formulated based on 900 g Palatal P4-01, 100 g styrene, 2 g of a 10% Co solution and 2 g of a 10 % t-butylcatechol solution in styrene(1,2 mmol/kg). After stirring for 5 min 1,72 g of a 10% TEMPOL solution in styrene (1 mmol/kg) was added, followed by 1,8 g N,N-dihydroxyethyl-p-toluidine (8 mmol/kg). After stirring for another 5 min, the mixture was left overnight and the following cure characteristics were recorded using 3% MEK peroxide : Tgel = 13,0 min; Tpeak = 23,6 min; peak temperature = 153°C.
After 106 days the curing was repeated, yielding : Tgel = 12,9 min; Tpeak = 23,9 min; peak temperature = 150°C.
This corresponds to a gel-time drift of 1%.

Example 9b (amine and oxime)

A resin was formulated based on 900 g Palatal P4-01, 100 g styrene, 2 g of a 10% Co solution and 2 g of a 10 % t-butylcatechol solution in styrene (1,2 mmol/kg). After stirring for 5 min, 1,05 g butanone oxime (= methylethylketone oxime) (12 mmol/kg) was added, followed by 1,8 g N,N-dihydroxyethyl-p-toluidine (8 mmol/kg). After stirring for another 5 min, the mixture was left overnight and the following cure characteristics were recorded using 3% MEK peroxide : Tgel = 35,0 min; Tpeak = 57,6 min; peak temperature = 107°C.
After 106 days the curing was repeated, yielding : Tgel = 45,5 min; Tpeak = 71,1 min; peak temperature = 111 °C.
This corresponds to a gel-time drift of 30%.

Example 9c (only amine)

A resin was formulated based on 900 g Palatal P4-01, 100 g styrene, 2 g of a 10% Co solution and 2 g of a 10 % t-butylcatechol solution in styrene (1,2 mmol/kg). After stirring for 5 min, 1,8 g N,N-dihydroxyethyl-p-toluidine (8 mmol/kg) was added. After stirring for another 5 min, the mixture was left overnight and the following cure characteristics were recorded using 3% MEK peroxide : Tgel = 11,5 min; Tpeak = 22 min; peak temperature = 151°C.
After 106 days the curing was repeated, yielding : Tgel = 18,5 min; Tpeak = 32,5 min; peak temperature = 149°C.
This corresponds to a gel-time drift of 69% after 106 days.

Comparative example I

A resin was formulated based on 900 g Palatal P4-01, 100 g styrene, 2 g of a 10% Co solution and 2 g of a 10 % t-butylcatechol solution in styrene (1,2 mmol/kg). After stirring for 5 min, the mixture was left overnight and the following cure characteristics were recorded using 3% MEK peroxide : Tgel = 13,1 min; Tpeak = 26,9 min; peak temperature = 144°C.
After 106 days the curing was rfepeated, yielding : Tgel = 32,1 min; Tpeak = 49,1 min; peak temperature = 145°C.
This corresponds to a gel-time drift of 145% after 106 days.
Example 9, in combination with Comparative Example I, clearly shows that next to the gel-time drift reduction caused by an aromatic amine the gel-time drift is further reduced by adding an N-oxyl compound as shown in exp 9a and 9b.

Example 10

A resin was formulated based on 993 g Diacryl 101 (Cray Valley Products, France), and 2,1 g of a 10 % t-butyl catechol solution in styrene (1,3 mmol/kg). After stirring for 5 min 0,28 g of a 10% TEMPOL solution in styrene (0,16 mmol/kg) was added followed by 7 g dihydroxy ethyl p-toluidine (31 mmol/kg). After stirring for another 5 min, the mixture was left overnight and the following cure characteristics were recorded using 2% Perkadox CH-50L (benzoyl peroxide; Akzo Nobel, the Netherlands) for curing :

Tgel = 5,5 min; T peak = 7,8 min; peak temp = 186°C.
After 80 days the curing was repeated, and the following values were observed:
Tgel = 5,6 min; T peak = 7,9 min; peak temp = 186°C.
This corresponds to a gel-time drift of 2%.

Example 10 further demonstrates that also other resin systems and initiator combinations may be applied.

## Claims

1. Method of providing an unsaturated polyester resin or vinyl ester resin composition containing a phenolic inhibitor and a reactive diluent, the resin composition being curable by means of radical curing, in which method first a primary unsaturated polyester resin or vinyl ester resin composition containing a phenolic inhibitor is produced with the phenolic inhibitor being selected from the group of phenolic compounds of which the O-H bond dissociation enthalpy is in the range of from about 325 to 380 kJ/mol, **characterized in that** an aromatic amine compound for which the calculated oxidation potential ($CE_{ox}$) is equal to or lower than 659 kJ/mol is added to said primary unsaturated polyester resin or vinyl ester resin composition.

2. Method according to claim 1, **characterized in that** the aromatic amine compound, having a $CE_{ox}$ equal to or lower than 659 kJ/mol is chosen from the group of aromatic tertiary amine compounds.

3. Method according to claim 2, **characterized in that** the aromatic amine compound is an aromatic tertiary amine having a β-hydroxy or a β-alkoxy (generally $C_{1-12}$) substituent.

4. Method according to any of claims 1 to 3, **characterized in that** the O-H bond dissociation enthalpy of the phenolic inhibitor selected is in the range of from about 330 to 351 kJ/mol.

5. Method according to any of claims 1 to 4, **characterized in that** the phenolic inhibitor is present in the primary unsaturated polyester resin or vinyl ester resin composition in an amount of from about 0,01 to 60 mmol per kg of basic resin system.

6. Method according to claim 5, **characterized in that** the amount of phenolic inhibitor is from about 0,2 to 35 mmol per kg of basic resin system, and more preferably more than 0,5. most preferably more than 1 mmol per kg of basic resin system.

7. Method according to any of claims 1 to 6, **characterized in that** the phenolic inhibitor is chosen from the group of phenol, hydroquinones and catechols.

8. Method according to claim 7, **characterized in that** the phenolic inhibitor is a 1,2-dihydroxy substituted aromatic compound.

9. Method according to any of claims 1 to 8, **characterized in that** the aromatic amine compound having a $CE_{ox}$ equal to or lower than 659 kJ/mol is added in an amount of from 0,5 to 300 mmol per kg of basic resin, more preferably of from 2 to 200 mmol per kg of basic resin.

10. Method according to claim 5, **characterized in that** the aromatic amine compound is added in an amount of from 5 to 50 mmol per kg of basic resin.

11. Method according to any of claims 1 to 10, **characterized in that** the aromatic amine compound is added in a molar ratio (phenolic inhibitor vs. aromatic amine compound) in the range of from 1 : 1 to 1 : 100, preferably of from 1 : 1 to 1 : 50, more preferably of from 1 : 2 to 1 : 20, as compared to the molar amount of the phenolic inhibitor.

12. Method according to any of claims 1 to 11, **characterized in that** in addition to the aromatic amine compound having a $CE_{ox}$ equal to or lower than 659 kJ/mol also an amount of an N-oxyl compound is added.

**13.** Method according to claim 12, **characterized in that** the N-oxyl compound is either an N-oxyl radical or a compound containing an - NO-E bond, wherein E represents a group selected from hydrogen, $C_{1}$-$_{18}$ alkylene, $C_{5-18}$ cycloalkylene, $C_{1-4}$ alkylene substituted by phenyl which is itself optionally substituted by one or two $C_{1-4}$ alkyl groups, or wherein E represents an ester, ether, carbonate, thioester, thioether or a cyclic or heterocyclic aliphatic or aromatic group.

**14.** Method according to any of claims 12 or 13, **characterized in that** the N-oxyl compound is selected from the group of compounds of formula (I), or (II),

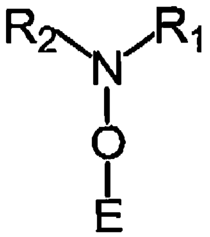

formula (I)

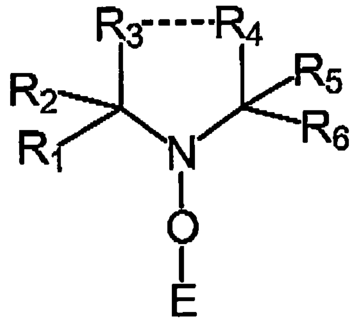

formula (II)

or from the group of oxime compounds of formula (III),

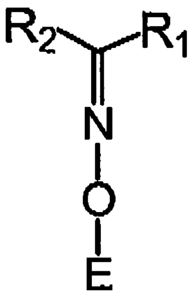

formula (III),

wherein E represents a group as listed in claim 13.

**15.** Method according to claim 14, **characterized in that** the N-oxyl compound is selected from the group of compounds of formula (II) wherein the nitrogen of the N-O bond forms part of a 5- or 6-membered cyclic group, or from the group of oxime compounds of formula (III)

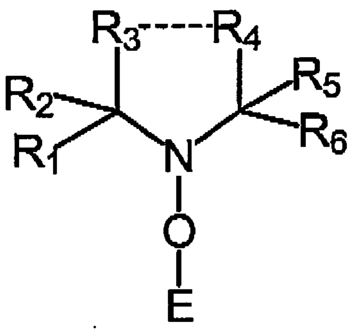

formula (II)

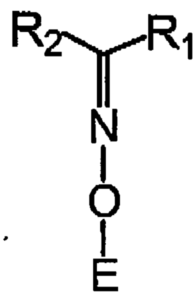

formula (III).

**16.** Method according to any of claims 12 to 15, **characterized in that** the N-oxyl compound to be added is an N-oxyl radical.

**17.** Method according to any of claims 12 to 16, **characterized in that** the N-oxyl compound is added to the resin system in an amount of at least 0,05 mmol per kg of basic resin system, more prefably in an amount of at most 50 mmol, even more preferably from about 0,2 to 20 mmol per kg of basic resin system, most preferably more than 1 mmol per kg of basic resin system.

**18.** Method according to claim 17, **characterized in that** the resins contain styrene as the reactive diluent.

**19.** Method according to any of claims 1 to 18, **characterized in that** the resin compositions are cured by means of a peroxide compound.

**20.** Method according to claim 19, **characterized in that** the peroxide used in the curing is a liquid peroxide.

**21.** Objects or structural parts as are obtained when curing the unsaturated polyester or vinyl ester resin compositions according to any of claims 1-20.

**Patentansprüche**

**1.** Verfahren zur Bereitstellung einer ungesättigtes Polyesterharz oder Vinylesterharz enthaltenden Zusammensetzung, die einen phenolischen Inhibitor und ein reaktives Verdünnungsmittel enthält, wobei die Harzzusammensetzung radikalisch härtbar ist, bei dem zunächst eine primäre ungesättigtes Polyesterharz oder Vinylesterharz enthaltende Zusammensetzung, die einen phenolischen Inhibitor enthält, hergestellt wird, wobei der phenolische Inhibitor aus der Gruppe von phenolischen Verbindungen, bei denen die Dissoziationsenthalpie der O-H-Bindung im Bereich von etwa 325 bis 380 kJ/mol liegt, ausgewählt wird, **dadurch gekennzeichnet, daß** der primären ungesättigtes Polyesterharz oder Vinylesterharz enthaltenden Zusammensetzung eine aromatische Aminverbindung, für die das berechnete Oxidationspotential ($CE_{ox}$) kleiner gleich 659 kJ/mol ist, zugesetzt wird.

**2.** Verfahren nach Anspruch 1, **dadurch gekennzeichnet, daß** die aromatische Aminverbindung mit einem $CE_{ox}$ kleiner gleich 659 kJ/mol aus der Gruppe der aromatischen tertiären Aminverbindungen ausgewählt wird.

**3.** Verfahren nach Anspruch 2, **dadurch gekennzeichnet, daß** es sich bei der aromatischen Aminverbindung um ein aromatisches tertiäres Amin mit einem β-Hydroxysubstituenten oder einem β-Alkoxysubstituenten (im allgemeinen mit 1 bis 12 Kohlenstoffatomen) handelt.

**4.** Verfahren nach einem der Ansprüche 1 bis 3, **dadurch gekennzeichnet, daß** die Dissoziationsenthalpie der O-H-Bindung des phenolischen Inhibitors im Bereich von etwa 330 bis 351 kJ/mol gewählt wird.

**5.** Verfahren nach einem der Ansprüche 1 bis 4, **dadurch gekennzeichnet, daß** der phenolische Inhibitor in der primären ungesättigtes Polyesterharz oder Vinylesterharz enthaltenden Zusammensetzung in einer Menge von etwa 0,01 bis 60 mmol pro kg Basisharzsystem vorliegt.

**6.** Verfahren nach Anspruch 5, **dadurch gekennzeichnet, daß** die Menge an phenolischem Inhibitor etwa 0,2 bis 35 mmol pro kg Basisharzsystem, weiter bevorzugt mehr als 0,5 und ganz besonders bevorzugt mehr als 1 mmol pro kg Basisharzsystem beträgt.

**7.** Verfahren nach einem der Ansprüche 1 bis 6, **dadurch gekennzeichnet, daß** der phenolische Inhibitor aus der Gruppe Phenol, Hydrochinone und Catechole ausgewählt wird.

**8.** Verfahren nach Anspruch 7, **dadurch gekennzeichnet, daß** es sich bei dem phenolischen Inhibitor um eine 1,2-dihydroxysubstituierte aromatische Verbindung handelt.

**9.** Verfahren nach einem der Ansprüche 1 bis 8, **dadurch gekennzeichnet, daß** die aromatische Aminverbindung mit einem $CE_{ox}$ kleiner gleich 659 kJ/mol in einer Menge von 0,5 bis 300 mmol pro kg Basisharz und weiter bevorzugt

von 2 bis 200 mmol pro kg Basisharz zugesetzt wird.

**10.** Verfahren nach Anspruch 5, **dadurch gekennzeichnet, daß** die aromatische Aminverbindung in einer Menge von 5 bis 50 mmol pro kg Basisharz zugesetzt wird.

**11.** Verfahren nach einem der Ansprüche 1 bis 10, **dadurch gekennzeichnet, daß** die aromatische Aminverbindung in einem Molverhältnis (phenolischer Inhibitor zu aromatischer Aminverbindung) im Bereich von 1 : 1 bis 1 : 100, vorzugsweise von 1 : 1 bis 1 : 50 und weiter bevorzugt von 1 : 2 bis 1 : 20 im Vergleich zu der molaren Menge des phenolischen Inhibitors zugesetzt wird.

**12.** Verfahren nach einem der Ansprüche 1 bis 11, **dadurch gekennzeichnet, daß** neben der aromatischen Aminverbindung mit einem $CE_{ox}$ kleiner gleich 659 kJ/mol auch eine Menge einer N-Oxylverbindung zugesetzt wird.

**13.** Verfahren nach Anspruch 12, **dadurch gekennzeichnet, daß** es sich bei der N-Oxylverbindung entweder um ein N-Oxylradikal oder um eine Verbindung mit einer -NO-E-Bindung, worin E für eine unter Wasserstoff, $C_{1-18}$-Alkylen, $C_{5-18}$-Cycloalkylen, $C_{1-4}$-Alkylen, das durch Phenyl substituiert ist, welches selbst gegebenenfalls durch eine oder zwei $C_{1-4}$-Alkylgruppen substituiert ist, ausgewählte Gruppe steht oder worin E für eine Estergruppe, Ethergruppe, Carbonatgruppe, Thioestergruppe, Thioethergruppe oder eine cyclische oder heterocyclische aliphatische oder aromatische Gruppe steht, handelt.

**14.** Verfahren nach einem der Ansprüche 12 oder 13, **dadurch gekennzeichnet, daß** die N-Oxylverbindung aus der Gruppe von Verbindungen der Formel (I) oder (II)

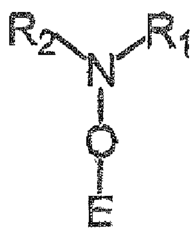

Formel (I)

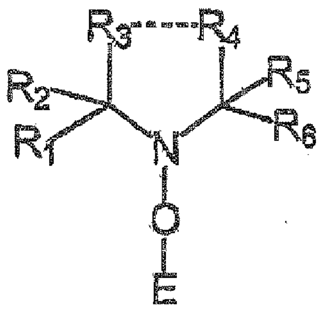

Formel (II)

oder der Gruppe von Oximverbindungen der Formel (III)

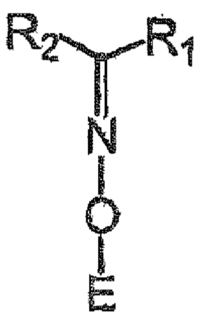

Formel (III),

worin E für eine Gruppe gemäß der Auflistung in Anspruch 13 steht, ausgewählt wird.

**15.** Verfahren nach Anspruch 14, **dadurch gekennzeichnet, daß** die N-Oxylverbindung aus der Gruppe von Verbindungen der Formel (II), worin der Stickstoff der N-O-Bindung Teil einer 5- oder 6-gliedrigen cyclischen Gruppe ist, oder der Gruppe von Oximverbindungen der Formel (III)

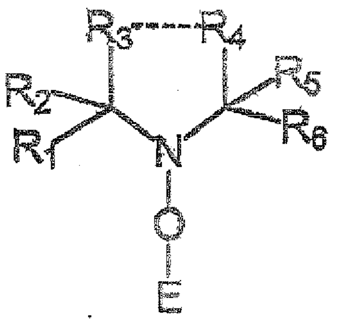

Formel (II)

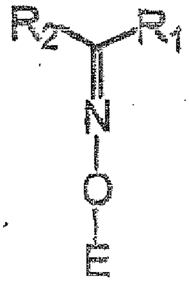

Formel (III).

ausgewählt wird.

**16.** Verfahren nach einem der Ansprüche 12 bis 15, **dadurch gekennzeichnet, daß** es sich bei der zuzusetzenden N-Oxylverbindung um ein N-Oxylradikal handelt.

**17.** Verfahren nach einem der Ansprüche 12 bis 16, **dadurch gekennzeichnet, daß** die N-Oxylverbindung dem Harzsystem in einer Menge von mindestens 0,05 mmol pro kg Basisharzsystem, weiter bevorzugt in einer Menge von höchstens 50 mmol, noch weiter bevorzugt von etwa 0,2 bis 20 mmol pro kg Basisharzsystem und ganz besonders bevorzugt von mehr als 1 mmol pro kg Basisharzsystem zugesetzt wird.

**18.** Verfahren nach Anspruch 17, **dadurch gekennzeichnet, daß** die Harze Styrol als das reaktive Verdünnungsmittel enthalten.

**19.** Verfahren nach einem der Ansprüche 1 bis 18, **dadurch gekennzeichnet, daß** die Harzzusammensetzungen mit Hilfe einer Peroxidverbindung gehärtet werden.

**20.** Verfahren nach Anspruch 19, **dadurch gekennzeichnet, daß** es sich bei dem bei der Härtung verwendeten Peroxid um ein flüssiges Peroxid handelt.

**21.** Gegenstände oder Konstruktionsteile, die beim Härten der ungesättigtes Polyester- oder Vinylesterharz enthaltenden Zusammensetzungen nach einem der Ansprüche 1-20 erhalten werden.

## Revendications

**1.** Procédé permettant de produire une composition de résine de polyester insaturé ou d'ester vinylique contenant un inhibiteur phénolique et un diluant réactif, la composition de résine pouvant être réticulée au moyen d'une réticulation radicalaire, procédé dans lequel une composition primaire de résine de polyester insaturé ou d'ester vinylique contenant un inhibiteur phénolique est d'abord produite en choisissant l'inhibiteur phénolique dans le groupe des composés phénoliques dont l'enthalpie de dissociation des liaisons O-H est sur la plage d'environ 325 à 380 kJ/mol, **caractérisé en ce qu'**un composé amine aromatique pour lequel le potentiel d'oxydation calculé ($CE_{ox}$) est inférieur ou égal à 659 kJ/mol est ajouté à ladite composition primaire de résine de polyester insaturé ou d'ester vinylique.

**2.** Procédé selon la revendication 1, **caractérisé en ce que** le composé amine aromatique, dont le $CE_{ox}$ est inférieur ou égal à 659 kJ/mol, est choisi dans le groupe des amines tertiaires aromatiques.

**3.** Procédé selon la revendication 2, **caractérisé en ce que** le composé amine aromatique est une amine tertiaire aromatique portant un substituant β-hydroxy ou β-alcoxy (en général en $C_{1-12}$).

**4.** Procédé selon l'une quelconque des revendications 1 à 3, **caractérisé en ce que** l'enthalpie de dissociation des liaisons O-H de l'inhibiteur phénolique choisi est sur la plage d'environ 330 à 351 kJ/mol.

**5.** Procédé selon l'une quelconque des revendications 1 à 4, **caractérisé en ce que** l'inhibiteur phénolique est présent dans la composition primaire de résine de polyester insaturé ou d'ester vinylique dans une proportion d'environ 0,01

à 60 mmoles par kg du système de résine de base.

**6.** Procédé selon la revendication 5, **caractérisé en ce que** la proportion d'inhibiteur phénolique est d'environ 0,2 à 35 mmoles par kg du système de résine de base, et mieux encore supérieure à 0,5, tout particulièrement supérieure à 1 mmole par kg du système de résine de base.

**7.** Procédé selon l'une quelconque des revendications 1 à 6, **caractérisé en ce que** l'inhibiteur phénolique est choisi dans le groupe constitué du phénol, des hydroquinones et des catéchols.

**8.** Procédé selon la revendication 7, **caractérisé en ce que** l'inhibiteur phénolique est un composé aromatique à substitution 1,2-dihydroxy.

**9.** Procédé selon l'une quelconque des revendications 1 à 8, **caractérisé en ce que** le composé amine aromatique dont le $CE_{ox}$ est inférieur ou égal à 659 kJ/mol est ajouté dans une proportion de 0,5 à 300 mmoles par kg de résine de base, mieux encore de 2 à 200 mmoles par kg de résine de base.

**10.** Procédé selon la revendication 5, **caractérisé en ce que** le composé amine aromatique est ajouté dans une proportion de 5 à 50 mmoles par kg de résine de base.

**11.** Procédé selon l'une quelconque des revendications 1 à 10, **caractérisé en ce que** le composé amine aromatique est ajouté dans un rapport molaire (inhibiteur phénolique par rapport au composé amine aromatique) sur la plage de 1:1 1 à 1:100, de préférence de 1:1 à 1:50, mieux encore de 1:2 à 1:20, rapporté à la quantité de moles d'inhibiteur phénolique.

**12.** Procédé selon l'une quelconque des revendications 1 à 11, **caractérisé en ce que**, en plus du composé amine aromatique dont le $CE_{ox}$ est inférieur ou égal à 659 kJ/mol, une quantité d'un composé N-oxyle est également ajoutée.

**13.** Procédé selon la revendication 12, **caractérisé en ce que** le composé N-oxyle est soit un radical N-oxyle, soit un composé contenant une liaison -NO-E, dans lequel E représente un groupe choisi parmi les suivants : hydrogène, alkylène en $C_{1-18}$, cycloalkylène en $C_{5-18}$, alkylène en $C_{1-4}$ substitué par un groupe phényle qui est lui-même éventuellement substitué par un ou deux groupes alkyle en $C_{1-4}$, ou dans lequel E représente un ester, un éther, un carbonate, un thioester, un thioéther ou un groupe aliphatique ou aromatique, cyclique ou hétérocyclique.

**14.** Procédé selon l'une quelconque des revendications 12 ou 13, **caractérisé en ce que** le composé N-oxyle est choisi dans le groupe des composés de formula (I) ou (II),

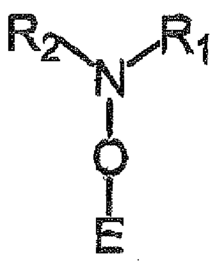

formule (I)

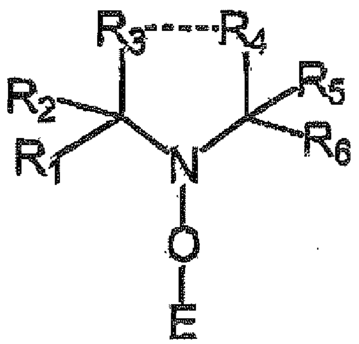

formule (II)

ou dans le groupe des composés oxime de formula (III),

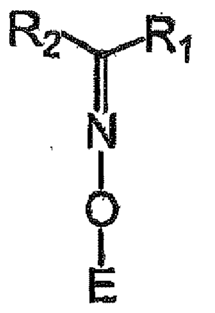

formule (III)

où E représente un groupe tel qu'indiqué dans la revendication 13.

**15.** Procédé selon la revendication 14, **caractérisé en ce que** le composé N-oxyle est choisi dans le groupe des composés de formula (II) dans lesquels l'atome d'azote de la liaison NO fait partie d'un groupe cyclique à 5 ou 6 chaînons, ou dans le groupe des composés oxime de formula (III)

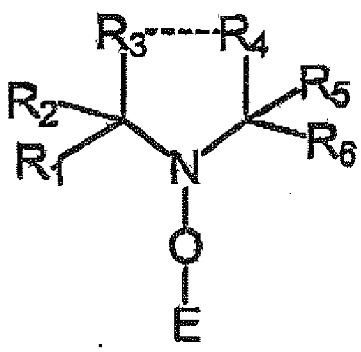

formule (II)

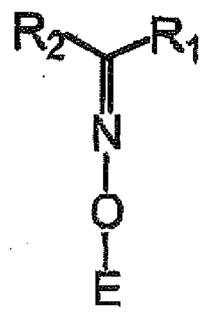

formule (III)

**16.** Procédé selon l'une quelconque des revendications 12 à 15, **caractérisé en ce que** le composé N-oxyle à ajouter est un radical N-oxyle.

**17.** Procédé selon l'une quelconque des revendications 12 à 16, **caractérisé en ce que** le composé N-oxyle est ajouté au système de résine dans une proportion d'au moins 0,05 mmole par kg du système de résine de base, mieux encore dans une proportion d'au plus 50 mmole, bien mieux encore d'environ 0,2 à 20 mmole par kg du système de résine de base, tout particulièrement supérieure à 1 mmole par kg du système de résine de base.

**18.** Procédé selon la revendication 17, **caractérisé en ce que** les résines contiennent du styrène comme diluant réactif.

**19.** Procédé selon l'une quelconque des revendications 1 à 18, **caractérisé en ce que** les compositions de résine sont réticulées au moyen d'un composé peroxyde.

**20.** Procédé selon la revendication 19, **caractérisé en ce que** le peroxyde utilisé dans la réticulation est un peroxyde liquide.

**21.** Objets ou pièces de structure obtenues lors de la réticulation des compositions de résine de polyester insaturé ou d'ester vinylique selon l'une quelconque des revendications 1-20.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20030197151 A1
- US 20030189192 A
- US 6028131 A
- US 4743657 A
- WO 8908669 A
- US 20020091214 A1


### Non-patent literature cited in the description


- **W. D. Cook et al.** *Polym. Int.,* 2001, vol. 50, 129-134
- **M. Malik et al.** *J.M.S. - Rev. Macromol. Chem. Phys.,* 2000, vol. C40 (2, 3), 139-165
- **M. Belford et al.** *Fire Retardant Chemicals Association Spring Conference,* 10 March 2002
- **Laarhoven et al.** *Acc. Chem. Res,* 1999, vol. 32, 342-349
- **de Heer et al.** *J. Org. Chem.,* 1999, vol. 64, 6969-6975